# FASCICULE DE BREVET EUROPEEN

(11) **EP 2 239 828 B1**
(45) Date de publication et mention de la délivrance du brevet: **11.08.2021**
(21) Numéro de dépôt: 10305367.4
(22) Date de dépôt: 09.04.2010
(51) Int. Cl.: H02K 3/30, H02K 15/10, H02K 9/10, F16C 32/04, H02K 7/14, H02K 15/12

(54) **Bobine d'une machine électrique tournante**
Spule einer rotierenden elektrischen Maschine
Coil of a rotating electrical machine

(30) Priorité: 09.04.2009 FR 0952338
(43) Date de publication de la demande: 13.10.2010
(73) Titulaire: GE Energy Power Conversion Technology Limited, Rugby Warwickshire CV21 1BU (GB)
(72) Inventeur: Durantay, Lionel, 54390 Frouard (FR)
(74) Mandataire: Serjeants LLP

(56) Documents cités:
- EP-A- 0 413 179
- EP-A- 0 951 132
- EP-A2- 1 863 152
- CN-A- 1 834 456
- DE-A1- 10 227 559
- US-A- 4 833 354
- US-A1- 2007 056 285

## Description

La présente invention concerne une machine de traitement de gaz, du type comportant :
- un circuit principal de traitement du gaz, raccordé à une chambre de compression du gaz,
- un compresseur de gaz, logé dans la chambre de compression,
- une machine électrique tournante, destinée à entraîner le compresseur de gaz, du type comprenant au moins une bobine pour la circulation de courant électrique en vue de la création d'un flux magnétique, et
un circuit secondaire de refroidissement, convoyant du gaz depuis la chambre de compression jusqu'à la machine électrique tournante, pour le refroidissement de cette machine électrique tournante.

Une telle machine est par exemple destinée pour un processus de traitement de gaz tel que l'extraction, la séparation, le stockage ou le transport de gaz, notamment de gaz naturel, comportant dans certains cas du sulfure d'hydrogène (H₂S).

Les machines électriques tournantes de forte puissance comportent au stator, et, éventuellement au rotor lorsque celui-ci n'est pas équipé d'aimants permanents, des bobines pour la circulation de courant électrique en vue de la création d'un flux magnétique. De même, de tels bobinages sont mis en œuvre dans des paliers magnétiques permettant de supporter des arbres en rotation, notamment des arbres d'alternateurs, de moteurs, de compresseurs.

Les machines électriques tournantes et les paliers magnétiques sont, dans une telle machine de traitement de gaz, refroidis par le gaz utilisé dans le processus de traitement. Les bobines sont donc en contact ce gaz qui, dans certains cas, notamment lorsqu'il contient du sulfure d'hydrogène, peut être agressif et corrosif envers ces bobines, en particulier en milieu humide. En d'autres termes, les machines électriques tournantes et les paliers magnétiques sont placés dans un milieu particulièrement agressif et corrosif.

Les bobines utilisées dans ces conditions sont formées d'un conducteur de cuivre recouvert d'un isolant tel que du polyimide. Le conducteur de cuivre ainsi isolé est enroulé sur lui-même pour former une bobine. Ces bobines sont mises en forme puis le bobinage ainsi formé est recouvert d'un ruban isolant formant une isolation secondaire couramment appelée isolation de masse. Cette isolation de masse est couramment formée d'un rubannage de polyimide, d'époxy, de polyester-mica ou de verre-mica.

Les parties droites des bobines ainsi enrubannées sont polymérisées puis les bobines sont montées dans la structure de la machine tournante, après quoi cette machine tournante est placée dans une étuve où les bobinages subissent une imprégnation par un matériau thermodurcissable, tel que de l'époxy, la polymérisation de ce matériau thermodurcissable s'effectuant à une température de l'ordre de 110°C à 160°C.

On constate que le milieu corrosif dans lequel fonctionnent les machines électriques tournantes ou les paliers magnétiques conduisent avec le temps à une détérioration des bobines.

DE 102 27 559 décrit un moteur électrique qui utilise un matériau PEEK pour former à la fois l'isolation primaire et secondaire pour une meilleure conductivité thermique.

EP 0 413 179 décrit une bobine où la couche d'isolation au sol comprend une feuille de base isolante renforcée par une résine de liaison et enroulée sur une couche d'empilement de conducteurs. Les couches isolantes de la plaie sont imprégnées d'une résine thermodurcissable. La feuille de base isolante, généralement du mica, peut être renforcée avec du PEEK. US 2007/056285 et CN 1 834 456 décrivent des motocompresseurs où la machine électrique tournante est refroidie par un gaz de traitement non corrosif. Selon CN 1 834 456, le gaz de traitement est décrit comme étant propre pour éviter des problèmes tels que la défaillance de l'isolation due aux impuretés.

EP 1 863 152 décrit une station de transport de fluide avec un circuit principal pour le traitement de gaz avec des composants corrosifs ou agressifs. La station de transport de fluide comprend un compresseur de gaz logé dans une chambre de compression et une machine électrique tournante. Le stator de la machine électrique tournante est isolé du gaz de traitement.

L'invention a pour but de proposer une machine de traitement de gaz dont les bobines et les machines électriques comportant ces bobines présentent une meilleure tenue à la corrosion lorsque celles-ci sont placées dans un milieu agressif et corrosif.

Outre une meilleure tenue à la corrosion, l'invention assure une meilleure tenue diélectrique lorsque celle-ci est alimentée par des convertisseurs de tension et une meilleure tenue thermique, supérieure ou égale à la classe H (180°C).

A cet effet, l'invention a pour objet une machine de traitement de gaz, notamment d'extraction, de séparation, de stockage ou de transport de gaz naturel comportant du sulfure d'hydrogène selon la revendication 1.

En effet, les inventeurs ont constaté qu'une bobine comportant de tels isolants primaire et secondaire présente une bonne résistance à la corrosion dans une telle machine de traitement de gaz.

Une machine de traitement de gaz selon l'invention peut également comporter l'une ou plusieurs des caractéristiques suivantes, prises seules ou selon toutes les combinaisons techniquement possibles :
- l'isolant primaire ou secondaire est constitué d'une matrice de PolyEtherEtherKetone renfermant des inclusions de mica ;
- l'isolant primaire et l'isolant secondaire sont constitués uniquement de PolyEtherEtherKetone ;
- l'isolant primaire a une épaisseur comprise entre 0,1 mm et 0,5 mm ;
- l'isolant secondaire a une épaisseur comprise entre 0,5 mm et 5 mm.

Un procédé de fabrication d'une machine de traitement de gaz telle que décrite ci-dessus, comporte une étape de fabrication d'une bobine consistant à :
- enrouler sous forme de plusieurs spires un conducteur revêtu d'un isolant primaire comportant du PolyEtherEtherKetone pour former un tore ; et
- recouvrir le tore de spires ainsi formé d'un isolant secondaire comportant du PolyEtherEtherKetone.

Suivant des modes particuliers de mise en œuvre, le procédé comporte l'une ou plusieurs des caractéristiques suivantes :
- le procédé comporte une étape de cuisson du PolyEtherEtherKetone de l'isolant primaire et de l'isolant secondaire par élévation de la température du tore jusqu'à une température sensiblement égale à 340°C ;
- le procédé comporte une étape d'imprégnation de la bobine après montage, avec une résine organique telle qu'une résine époxy ou polyester-imide.

L'invention sera mieux comprise à la lecture de la description qui va suivre, donnée uniquement à titre d'exemple et faite en se référant aux dessins sur lesquels :
- la figure 1 est une vue en perspective d'un stator de machine électrique tournante ;
- la figure 2 est une vue à plus grande échelle des têtes de bobine du stator de la figure 1 ;
- la figure 3 est une vue schématique en coupe transversale d'une bobine de la machine des figures 1 et 2 ;
- la figure 4 est une vue schématique d'un palier magnétique ; et
- la figure 5 est une vue schématique d'une machine de traitement de gaz.

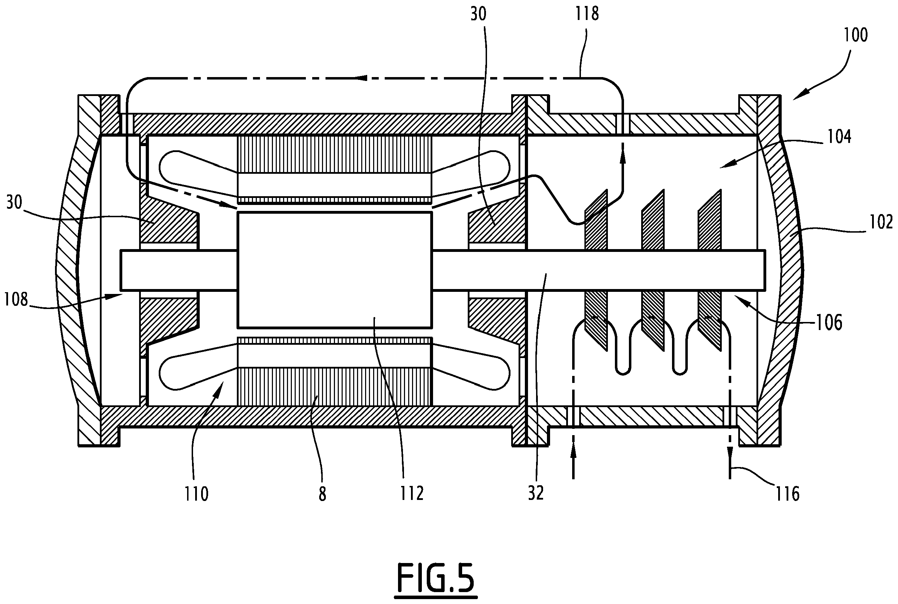

On a représenté sur la figure 5 une machine 100 de traitement de gaz selon un exemple de mode de réalisation de l'invention. Une telle machine est généralement appelée « unité motocompresseur ».

Une telle machine 100 de traitement de gaz est par exemple destinée à l'extraction, à la séparation, au stockage ou au transport de gaz, notamment de gaz naturel, le gaz comportant dans certains cas du sulfure d'hydrogène (H₂S).

La machine 100 de traitement de gaz comporte une enceinte 102, délimitant une chambre 104 de compression du gaz, dans laquelle est logé un compresseur de gaz 106 de type classique, et un logement 108 pour une machine électrique tournante 110.

Le gaz est maintenu sous pression dans la chambre 104, à une pression généralement supérieure à 10 bar, par exemple 80 bar.

De préférence, la chambre de compression 104 et le logement 108 communiquent entre eux, comme cela est représenté sur la figure 5. En variante, la chambre de compression et le logement constituent une unique chambre.

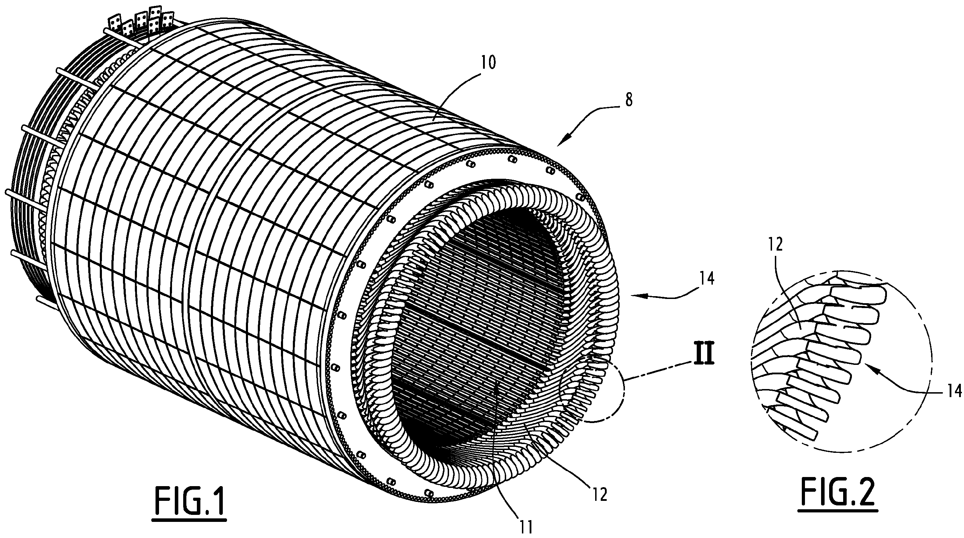

La machine électrique tournante 110 comporte, de manière classique, un stator 8, qui sera décrit plus précisément ci-dessous en référence à la figure 1, et un rotor 112, solidaire en rotation d'un arbre de compresseur 32 par l'intermédiaire duquel le compresseur 106 est entraîné.

L'arbre de compresseur 32 est supporté par des paliers magnétiques 30, destinés à former un champ magnétique propre à maintenir l'arbre 32 en sustentation magnétique entre ces paliers magnétiques 30.

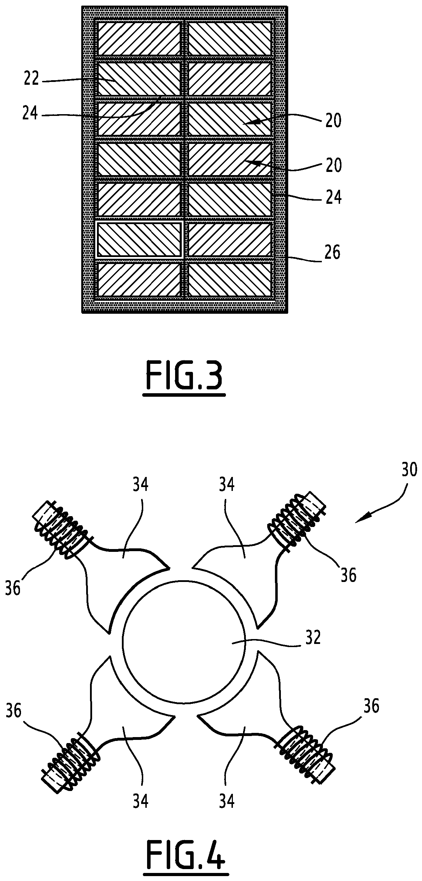

Un tel palier magnétique 30 sera décrit plus précisément ci-après en référence à la figure 4.

La machine 100 de traitement de gaz comporte également un circuit principal 116 de traitement du gaz, de type classique, raccordé à la chambre de compression 104.

Enfin, la machine 100 de traitement de gaz comporte un circuit secondaire 118 de refroidissement, par exemple formé par une dérivation sur le circuit principale 116, convoyant du gaz depuis la chambre de compression 104 jusqu'au logement 108 contenant la machine électrique tournante 110, pour le refroidissement de cette machine électrique tournante 110 par le gaz.

Le stator 8 illustré sur la figure 1 est un stator de machine électrique 110 tournante de moyenne ou forte puissance, celle-ci étant par exemple comprise entre 100 kW et 100 MW, de préférence supérieure à 1 MW.

On notera qu'une telle machine électrique 110 présente de préférence une vitesse de rotation du rotor 112 supérieure à 6000 tours/minute.

Il comporte une carcasse 10 formée d'un empilement de tôles dans lesquelles sont délimitées des encoches longitudinales 11 s'étendant d'un bout à l'autre de la carcasse. Des bobines 12 sont reçues dans chacune des encoches en étant décalées angulairement. Ces bobines sont connectées les unes aux autres par tout moyen connu adapté.

A leurs extrémités, les bobines présentent des têtes de bobine 14 comme illustré sur la figure 2 où chaque bobine forme un coude reliant deux tronçons rectilignes de la bobine s'étendant chacun dans une encoche sur toute la longueur de la carcasse.

Chaque bobine forme ainsi un tore ou boucle unique, lui-même constitué d'un ensemble de spires formées d'un même conducteur constitué par exemple de cuivre.

Comme illustré sur la figure 3, chaque bobine 12 comprend quatorze spires 20 d'un même conducteur 22. Ce conducteur est isolé par un revêtement isolant extérieur 24 formant un isolant primaire. De préférence, le conducteur présente une section rectangulaire.

L'isolant est formé d'un enrubannage avec recouvrement partiel d'une bande d'un matériau contenant du polyétheréthercétone. Le polyétheréthercétone est couramment désigné par le sigle PEEK (acronyme anglais de PolyEtherEtherKetone). De préférence, ce matériau isolant est formé de PEEK.

L'épaisseur de l'isolant primaire est comprise entre 0,1 mm et 0,5 mm et est par exemple égale à 0,2 mm

Avantageusement en variante, le matériau isolant est formé d'une matrice de PEEK comportant des inclusions de mica.

La bobine ainsi constituée des spires adjacentes isolées est elle-même enrubannée dans un isolant secondaire 26 pour former une isolation de masse. Cette isolation secondaire 26 est formée d'un enrubannage à l'aide d'un ruban comprenant du PEEK. Avantageusement, cet enrubannage est constitué de PEEK. En variante, l'isolation secondaire est formée d'une matrice de PEEK comportant des inclusions de mica.

L'épaisseur de l'isolation de masse est comprise entre 0,5 mm et 5 mm.

Pour la fabrication d'une telle bobine, une bande de cuivre 22 comportant sur toute sa longueur une isolation primaire de PEEK est enroulée sur elle-même pour former un nombre prédéterminé de spires 20, par exemple égal à 14. La bobine 12 ainsi formée est elle-même recouverte de l'isolation de masse 26 en PEEK.

Les isolations primaires et secondaires des parties droites de la bobine sont polymérisées en étant maintenues dans une presse et chauffées à une température de polymérisation du PEEK, proche de 340°C.

Les isolations primaires et secondaires des têtes de bobines 14, constituées des parties courbes des bobines, sont ensuite polymérisées par chauffage en étant maintenues dans des gabarits chauffants permettant une élévation de température autour de 340°C.

Avantageusement, mais de manière facultative, l'ensemble ainsi formé est imprégné par un matériau thermodurcissable, par exemple une résine organique telle qu'une résine époxy ou polyester-imide, en étant maintenu à une température de l'ordre de 170°C.

Cette imprégnation s'effectue après que les bobines sont placées sur la carcasse du rotor ou du stator de la machine tournante.

En variante, la bobine est formée de fils LITZ ou de barres ROEBEL, c'est-à-dire de deux demi-bobines, chacune formée d'un ensemble de conducteurs isolés les uns des autres par du PEEK. Les conducteurs de chaque barre ROEBEL ou de LITZ sont reliés ensemble pour former une bobine en étant eux-mêmes enrubannés dans une isolation de masse en PEEK ou contenant du PEEK.

Après polymérisation du PEEK, les demi-bobines sont montées dans la carcasse du rotor ou du stator puis les extrémités des deux demi-bobines sont assemblées pour former une bobine.

On constate que les machines électriques tournantes ainsi formées à partir de bobines revêtues d'un matériau isolant comportant du PEEK, tant dans l'isolation primaire que dans l'isolation de masse, ont une bonne résistance à la corrosion, même dans des milieux très corrosifs. Ainsi, les bobines de la machine électrique tournante 110 présentent une bonne durée de vie, bien qu'elles soient au contact du gaz de traitement pour leur refroidissement, ce gaz pouvant se révéler corrosif dans certains cas, notamment lorsqu'il comporte du sulfure d'hydrogène (H₂S).

En variante, des bobines ainsi constituées de spires conductrices ayant une isolation primaire contenant du PEEK, les spires ainsi formées étant elles-mêmes recouvertes d'une isolation de masse contenant du PEEK sont avantageusement utilisées dans les paliers magnétiques 30 pour former le champ magnétique propre à maintenir l'arbre de rotation du palier magnétique en sustentation magnétique entre les différentes bobines.

Un tel palier 30 est représenté sur la figure 4 sur laquelle la référence 32 représente un arbre de rotation. Le palier 30 comporte quatre patins magnétiques entre lesquels l'arbre 32 est retenu en lévitation. Chaque patin comprend un noyau magnétique 34 s'évasant au voisinage de l'arbre et une bobine 36 telle que définie ci-dessus.

On notera que l'invention n'est pas limitée au mode de réalisation précédemment décrit, et pourrait présenter diverses variantes sans sortir du cadre des revendications.

## Revendications

1. Machine (100) de traitement de gaz, notamment d'extraction, de séparation, de stockage ou de transport de gaz naturel comportant du sulfure d'hydrogène, du type comportant :
- un circuit principal (116) de traitement du gaz naturel comportant du sulfure d'hydrogène, raccordé à une chambre (104) de compression du gaz,
- un compresseur de gaz (106), logé dans la chambre de compression (104),
- une machine électrique tournante (110), destinée à entraîner le compresseur de gaz (106), du type comprenant un stator comprenant une bobine (12) pour la circulation de courant électrique en vue de la création d'un flux magnétique, dans laquelle la bobine (12) comporte au moins un tore formé d'un enroulement de plusieurs spires (20) constituées chacune d'au moins un conducteur (22) isolé suivant sa longueur par un isolant primaire (24), l'enroulement formant le tore étant recouvert lui-même d'un isolant secondaire (26), l'isolant primaire (24) et l'isolant secondaire (26) comportant du PolyEtherEtherKetone, et dans laquelle la bobine est imprégnée d'une résine organique telle qu'une résine époxy ou polyester-imide,
- un logement (108) pour la machine électrique tournante (110), ce logement (108) communiquant avec la chambre de compression (104), et
- un circuit secondaire (118) de refroidissement, convoyant du gaz naturel comportant du sulfure d'hydrogène depuis la chambre de compression (104) jusqu'à la machine électrique tournante (110), pour le refroidissement de cette machine électrique tournante (110) par le gaz naturel comportant du sulfure d'hydrogène, la bobine (12) isolée étant en contact avec le gaz naturel comportant du sulfure d'hydrogène.

2. Machine de traitement de gaz (100) selon la revendication 1, dans laquelle l'isolant primaire (24) ou secondaire (26) de la bobine (12) est constitué d'une matrice de PolyEtherEtherKetone renfermant des inclusions de mica.

3. Machine de traitement de gaz (100) selon la revendication 1, dans laquelle l'isolant primaire (24) et l'isolant secondaire (26) de la bobine sont constitués uniquement de PolyEtherEtherKetone.

4. Machine de traitement de gaz (100) selon l'une quelconque des revendications précédentes, dans laquelle l'isolant primaire (24) de la bobine (12) a une épaisseur comprise entre 0,1 mm et 0,5 mm.

5. Machine de traitement de gaz (100) selon l'une quelconque des revendications précédentes, dans laquelle l'isolant secondaire (26) de la bobine (12) a une épaisseur comprise entre 0,5 mm et 5 mm.

## Patentansprüche

1. Gasbehandlungsmaschine (100), insbesondere zur Extraktion, Abscheidung, Lagerung oder zum Transport von Erdgas, das Schwefelwasserstoff umfasst, vom Typ, der umfasst:
- einen Hauptkreislauf (116) zur Behandlung des Erdgases, das Schwefelwasserstoff umfasst, der an eine Kammer (104) zur Kompression des Gases angeschlossen ist,
- einen Gaskompressor (106), der in der Kompressionskammer (104) untergebracht ist,
- eine rotierende elektrische Maschine (110), die dazu bestimmt ist, den Gaskompressor (106) anzutreiben, vom Typ, der einen Stator umfasst, der eine Spule (12) für die Stromzirkulation zum Schaffen eines Magnetflusses umfasst, wobei die Spule (12) mindestens einen Magnetkern umfasst, der aus einer Wicklung aus mehreren Windungen (20) gebildet ist, die jeweils aus mindestens einem Leiter (22) bestehen, der entlang seiner Länge von einer Primärisolation (24) isoliert ist, wobei die Wicklung, die den Magnetkern bildet, selbst mit einer Sekundärisolation (26) bedeckt ist, wobei die Primärisolation (24) und die Sekundärisolation (26) Polyetheretherketon umfassen, und wobei die Spule mit einem organischen Harz, wie einem Epoxidharz oder Polyesterimidharz, getränkt ist,
- eine Aufnahme (108) für die rotierende elektrische Maschine (110), wobei diese Aufnahme (108) mit der Kompressionskammer (104) in Verbindung steht, und
- einen Sekundärkühlkreislauf (118), der Erdgas, das Schwefelwasserstoff umfasst, von der Kompressionskammer (104) bis zu der rotierenden elektrischen Maschine (110) für das Kühlen dieser rotierenden elektrischen Maschine (110) durch das Erdgas, das Schwefelwasserstoff umfasst, fördert, wobei die isolierte Spule (12) mit dem Erdgas, das Schwefelwasserstoff umfasst, in Berührung ist.

2. Gasbehandlungsmaschine (100) nach Anspruch 1, wobei die Primärisolation (24) oder Sekundärisolation (26) der Spule (12) aus einer Polyetheretherketon-Matrix, die Mica-Einschlüsse einschließt, besteht.

3. Gasbehandlungsmaschine (100) nach Anspruch 1, wobei die Primärisolation (24) und die Sekundärisolation (26) der Spule nur aus Polyetheretherketon bestehen.

4. Gasbehandlungsmaschine (100) nach einem der vorstehenden Ansprüche, wobei die Primärisolation (24) der Spule (12) eine Dicke zwischen 0,1 mm und 0,5 mm aufweist.

5. Gasbehandlungsmaschine (100) nach einem der vorstehenden Ansprüche, wobei die Sekundärisolation (26) der Spule (12) eine Stärke zwischen 0,5 mm und 5 mm aufweist.

## Claims

1. Gas treatment machine (100), in particular for extraction, separation, storage or transport of natural gas comprising hydrogen sulphide, of the type comprising:
- a main circuit (116) for treating natural gas comprising hydrogen sulphide, connected to a gas compression chamber (104),
- a gas compressor (106), housed in the compression chamber (104),
- a rotating electric machine (110), intended to drive the gas compressor (106), of the type comprising a stator comprising a coil (12) for the circulation of electric current in view of creating a magnetic flow, wherein the coil (12) comprises at least one torus formed of a winding of several turns (20) each formed of at least one conductor (22) insulated along its length by a primary insulator (24), the winding forming the torus itself being covered by a secondary insulator (26), the primary insulator (24) and the secondary insulator (26) comprising polyether ether ketone, and wherein the coil is impregnated with an organic resin such as an epoxy resin or polyester-imide resin,
- a housing (108) for the rotating electric machine (110), this housing (108) communicating with the compression chamber (104), and
- a secondary cooling circuit (118), conveying the natural gas comprising hydrogen sulphide from the compression chamber (104) to the rotating electric machine (110), for the cooling of this rotating electric machine (110) by the natural gas comprising hydrogen sulphide, the insulated coil (12) being in contact with the natural gas comprising hydrogen sulphide.

2. Gas treatment machine (100) according to claim 1, wherein the primary (24) or secondary (26) insulator of the coil (12) is formed by a polyether ether ketone matrix enclosing mica inclusions.

3. Gas treatment machine (100) according to claim 1, wherein the primary insulator (24) and the secondary insulator (26) of the coil are only formed of polyether ether ketone.

4. Gas treatment machine (100) according to any one of the preceding claims, wherein the primary insulator (24) of the coil (12) has a thickness comprised between 0.1mm and 0.5mm.

5. Gas treatment machine (100) according to any one of the preceding claims, wherein the secondary insulator (26) of the coil (12) has a thickness comprised between 0.5mm and 5mm.
